# EUROPEAN PATENT SPECIFICATION

(11) **EP 3 239 027 B1**
(45) Date of publication and mention of the grant of the patent: **12.06.2019**
(21) Application number: 16204675.9
(22) Date of filing: 16.12.2016
(51) Int. Cl.: B62K 11/14, B62H 5/00, B60R 25/24, B62H 5/06, B62J 23/00, B62J 37/00

(54) **STRADDLED VEHICLE**
GRÄTSCHSITZFAHRZEUG
VÉHICULE À ENFOURCHER

(30) Priority: 28.04.2016 JP 2016090692
(43) Date of publication of application: 01.11.2017
(73) Proprietor: Yamaha Hatsudoki Kabushiki Kaisha, Iwata-shi, Shizuoka 438-8501 (JP)
(72) Inventor: TERAO, Haruki, Iwata-shi, Shizuoka 438-8501 (JP)
(74) Representative: Grünecker Patent- und Rechtsanwälte PartG mbB

(56) References cited:
- EP-A2- 1 958 859
- CN-A- 103 507 886
- DE-A1- 10 049 442
- US-A- 5 343 077

## Description

The present invention relates to a straddled vehicle.

In a straddled vehicle such as a motorcycle, various types of switches such as a starter switch and a winker switch are provided. An example belonging to the state of the art is disclosed in the documents CN 103 507 886 A, US 5 343 077 A. US 5 343 077 A discloses a straddled vehicle according the preamble of claim 1.
Further, in a vehicle including a smart key system that performs authentication of a user by a smart key, a start switch for starting an electric system and the like are provided. In a scooter-type vehicle described in JP 2008-195242 A, a front cover and an inner cover are provided to cover surroundings of a steering shaft. The inner cover is provided at a position further forward than a seat and includes an inner panel and an upper panel. The inner panel extends upward from footboards, and the upper panel extends forward from the upper end of the inner panel. A plurality of switches including the start switch are provided on the upper panel.

The upper panel is located at a position further rearward than the front cover and further lower than a handle. Therefore, with a rider not seated on the seat, it is not easy to operate the switches on the upper panel. Further, the rider sometimes forgets to perform a necessary operation of the switch on the upper panel.

An object of the present invention is to provide a straddled vehicle that prevents a rider from forgetting to perform a necessary operation of a switch. According to the present invention, said object is solved by a straddle vehicle having the features of independent claim 1. Preferred embodiments are laid down in the dependent claims.

A straddled vehicle according to the present invention includes a vehicle main body that includes a vehicle frame, a steering shaft provided to be turnable with respect to the vehicle frame, a handle bar provided at the steering shaft to extend in a vehicle width direction, left and right grips respectively provided at left and right ends of the handle bar, a handle cover provided between the left and right grips to extend from a first portion of the handle bar located at a position further rightward than the steering shaft to a second portion of the handle bar located at a position further leftward than the steering shaft and configured to turn together with the handle bar, a right switch box provided at a portion of the handle bar located at a position further rightward than the handle cover and adjacent to the right grip, a meter that is provided at a position further forward than the handle cover to be fixed to the vehicle main body and configured to display at least a travelling speed of the vehicle, a first switch; and a second switch provided on the handle cover, wherein the second switch includes a left switch provided at a first position on an upper surface of the handle cover, and a right switch provided at a second position on the upper surface of
the handle cover, the first position being located between a rotation center axis of the steering shaft and the second portion of the handle bar, the second position being located between the rotation center axis of the steering shaft and the first portion of the handle bar,
wherein a left switch box is provided at a position of the handle bar located at a position further leftward than the handle cover and adjacent to the left grip; wherein the first switch is provided at at least one of the left switch box and the right switch box; wherein the handle cover has first and second inclined surfaces inclined with respect to a virtual plane orthogonal to the steering shaft, the fist inclined surface being located at a position further rightward than the rotation center axis of the steering shaft, the second inclined surface being located at a position further leftward than the rotation center axis of the steering shaft, wherein, as a distance between each of the positions on the inclined surfaces and the rotation center axis of the steering shaft is configured to increase, a distance between the virtual plane and each of the positions on the inclined surfaces is configured to gradually increase; and wherein the left switch is provided on the second inclined surface, and the right switch is provided on the first inclined surface.

Because the first switch is provided at the left or right switch box adjacent to the left or right grip in this straddled vehicle, the rider can easily operate the first switch while holding the left or right grip.

Further, the second switch is provided on the handle cover that extends from a position further rightward than the steering shaft to a position further leftward than the steering shaft. The handle cover is turnable with respect to the vehicle frame together with the handle bar. On the other hand, the meter is provided to be fixed to the vehicle frame. Therefore, when the vehicle is not traveling, for example, in the case where the handle bar is largely turned, the handle cover overlaps with the meter in a line-of-sight direction of the rider. Therefore, the second switch provided on the handle cover is likely to come into a field of view of the rider. Thus, attention of the rider can be directed to the second switch, and the rider can be prompted to operate the second switch. Therefore, the rider is prevented from forgetting to perform a necessary operation of the second switch.

Further, the second switch is not provided at the left or right switch box but is provided on the handle cover, so that a reduction in operability of the first switch provided at the left or right switch box due to the second switch is prevented.

Because the second switch is provided on the inclined surface, even in the case where the handle bar is turned such that the second switch is located at a distant position from the rider, the second switch is directed to the driver. Therefore, a reduction in operability of the second switch due to the turning of the handle is inhibited.

The second switch is configured to transmit an instruction to a target of control to be controlled when the vehicle is not travelling.

In the case where the handle bar is largely turned when the vehicle is not travelling, the handle cover overlaps with the meter that displays a travelling speed of the vehicle in the line-of-sight direction of the rider. Thus, the rider can intuitively recognize that the vehicle is not travelling. Thus, the rider can be prompted to operate the second switch when the vehicle is not travelling.

The straddled vehicle may further include a seat provided at the vehicle main body, wherein the handle bar may be provided to be turnable within a predetermined angular range with respect to the vehicle frame, wherein the first position of the left switch or the second position of the right switch on the upper surface of the handle cover overlaps with the meter in a line-of-sight direction of a rider who is seated on the seat with the handle bar turned to a maximum within the angular range.

When the vehicle is not travelling, the handle bar is sometimes turned to the left or right to the maximum. In the above-mentioned configuration, in the case where the handle bar is turned to the maximum, because the second switch overlaps with the meter in the line-of-sight direction of the rider, the rider can be prompted to operate the second switch when the vehicle is not travelling.

The second switch is configured to transmit an instruction when being pressed. In this case, it is possible to reduce the measurement of the second switch. Thus, the second switch can be arranged even on the handle cover on which a large flat surface is difficult to be obtained.

The second switch is configured to transmit different instructions depending on a length of a time period during which the second switch is pressed. In this case, different instructions can be transmitted by operations of the common second switch. Therefore, it is possible to transmit various types of instructions without an increase in number of the second switches on the handle cover.

The different instructions transmitted by the second switch may be instructions for different targets of control. In this case, instructions can be transmitted to different targets of control by the operations of the common second switch. Therefore, it is possible to transmit instructions to various types of targets of control without an increase in number of the second switches.

A distance between the left switch and the rotation center axis of the steering shaft may be shorter than a distance between the left switch and the first switch and a distance between the right switch and the rotation center axis of the steering shaft may be shorter than a distance between the right switch and the first switch. In this case, the change of the position of the second switch caused by the turning of the handle bar is inhibited. Thus, it is possible to direct the attention of the rider to the second switch while a reduction in operability of the second switch is inhibited.

The straddled vehicle may further include a controller that is configured to perform user authentication by a communication system using a portable device, wherein the controller is configured to allow the user authentication to be successful in the case where an authenticated portable device has been detected, is configured to accept an instruction transmitted by the second switch in the case where the user authentication is successful and does not have to accept an instruction transmitted by the second switch in the case where the user authentication is not successful.

Because the second switch is provided on the handle cover located at a relatively high position, visibility and operability for the rider are high. On the other hand, another person who is not the authenticated owner may operate the second switch for vandalism or criminal purposes. Then, in the above-mentioned configuration, the operation of the second switch is enabled only in the case where the authenticated owner having the authenticated portable device is present near the vehicle.

This improves security of the vehicle. The first switch is configured to transmit an instruction for allowing the controller to perform the user authentication. In this case, the user authentication is performed when the rider operates the first switch while holding the grip. Thus, the rider can easily perform an operation for the user authentication and perform an operation for starting the vehicle right after the successful user authentication.

The straddled vehicle may further include a thrust force generator that is configured to generate a thrust force of the vehicle, and the second switch is configured to transmit an instruction for stopping generation of the thrust force by the thrust force generator. In this case, when the vehicle is not travelling, it is possible to stop generation of the thrust force by the thrust force generator by an operation of the second switch. Fig. 1 is a schematic side view showing a schematic configuration of a motorcycle according to one embodiment of the present invention;Fig. 2 is an external perspective view showing a configuration of a handle;Fig. 3 is a schematic diagram for explaining a shape of a handle cover;Fig. 4 is a diagram showing a handle bar being largely turned;Fig. 5 is an external perspective view of a rear portion of a motorcycle;Fig. 6 is a block diagram for explaining a control system of the motorcycle;Fig. 7 is a schematic perspective view for explaining an example of a specific configuration of a press restrictor; and Figs. 8(a) and 8(b) are schematic plan views for explaining operations of the press restrictor.

### DESCRIPTION OF THE PREFERRED EMBODIMENTS

A motorcycle according to embodiments of the present invention will be described below with reference to drawings. The motorcycle is one example of a straddled vehicle.

### (1) Motorcycle

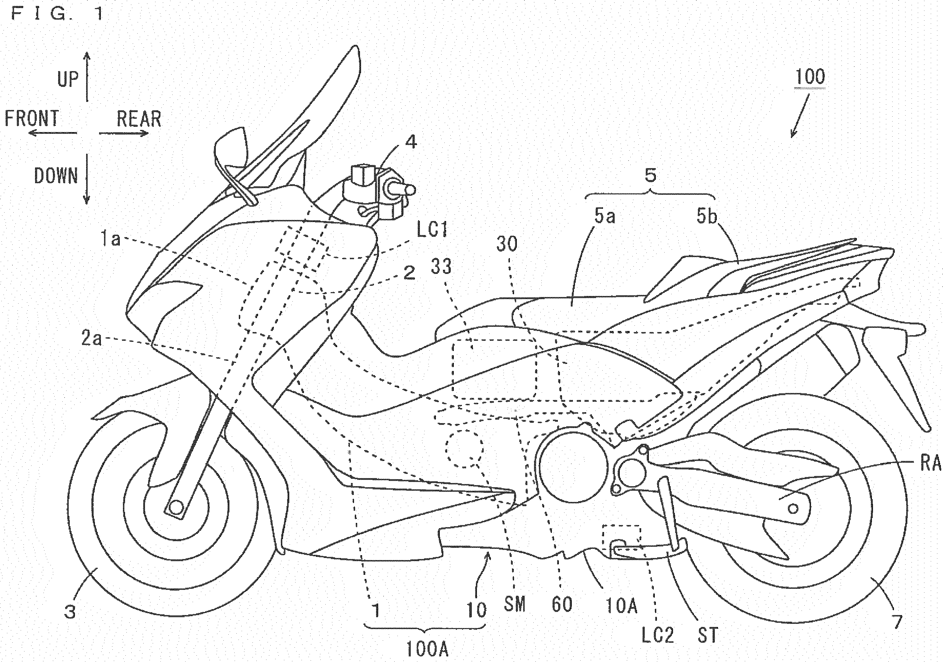

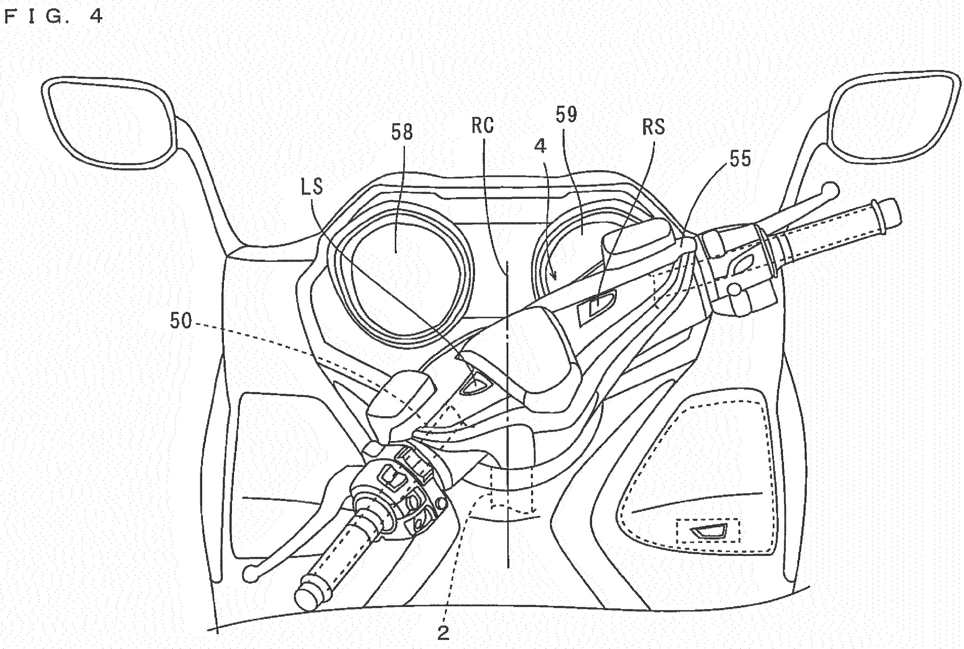

Fig. 1 is a schematic side view showing a schematic configuration of the motorcycle according to one embodiment of the present invention. As shown in Fig. 1, the motorcycle 100 has a main body 100A. The main body 100A includes a main frame 1 and an engine 10. The main frame 1 is an example of a vehicle frame. In the following description, a vehicle front-and-rear direction means forward and rearward directions based on the main body 100A, a vehicle width direction means a width direction (leftward and rightward directions) based on the main body 100A, and the vehicle up-and-down direction means upward and downward directions based on the main body 100A. In Fig. 1 and subsequent Fig. 4, arrows indicating the directions are shown. Further, a vehicle plan view means that the motorcycle 100 is viewed downward in the vehicle up-and-down direction, and a vehicle side view means that the motorcycle 100 is viewed from one side of the vehicle to the other side of the vehicle in the vehicle width direction.

A head pipe 1a is provided at the front end of the main frame 1, and a steering shaft 2 is supported at the head pipe 1a to be turnable. Turning of the steering shaft 2 is restricted to be within a constant angular range by a stopper mechanism (not shown). A handle 4 is provided at the upper end of the steering shaft 2. Further, a steering fixer LC1 that prevents the steering shaft 2 from turning is provided at the steering shaft 2. The steering fixer LC1 is switched between a releasing state and a preventing state, the releasing state being a state where the steering shaft 2 can be turned, and the preventing state being a state where the steering shaft 2 is prevented from turning while being located at a constant turning position.

A pair of left and right fork pipes 2a is coupled to the lower end of the steering shaft 2. A front wheel 3 is rotatably attached to the lower ends of the pair of fork pipes 2a. A rear frame 60 is provided to extend rearward in the vehicle front-and-rear direction from the main frame 1, and a rear storage 30 is supported by the rear frame 60. The rear storage 30 forms a storage space for storing a relatively large object such as a helmet. A seat 5 on which two riders can be seated is attached to an upper surface of the rear storage 30. The seat 5 has a front seat portion 5a on which a rider (a driver) is seated and a rear seat portion 5b on which a passenger is seated. A fuel tank 33 is arranged at a position further forward than the rear storage 30 in the vehicle front-and-rear direction.

The engine 10 is provided at a position further downward than the seat 5 in the vehicle up-and-down direction. The engine 10 includes a piston, an injector, an ignition device, a crankshaft and the like (not shown) and includes an engine casing 10A that stores them. A starter motor SM that drives the crankshaft of the engine 10 is arranged in the vicinity of the engine casing 10A.

In the engine casing 10A, a stand ST and a stand fixer LC2 are provided. The stand ST can be switched between a supporting state and an unsupporting state, the supporting state being a state where the stand ST is in contact with the ground and supports the main body 100A and the unsupporting state being a state where the stand ST is spaced apart from the ground. In Fig. 1, the stand ST is in the unsupporting state. The motorcycle 100 maintains an up-right attitude when the stand ST is switched to the supporting state. The stand fixer LC2 is switched between a releasing state and a preventing state, the releasing state being a state where the supporting state of the stand ST can be switched to the unsupporting state and the preventing state being a state where the supporting state of the stand ST is prevented from being switched to the unsupporting state.

A pair of left and right rear arms RA is provided to extend rearward in the vehicle front-and-rear direction from the engine casing 10A. A rear wheel 7 is rotatably supported by the pair of rear arms RA. The rotation of the rear wheel 7 is driven by motive power generated by the engine 10, and a thrust force of the motorcycle 100 is generated.

### (2) Handle

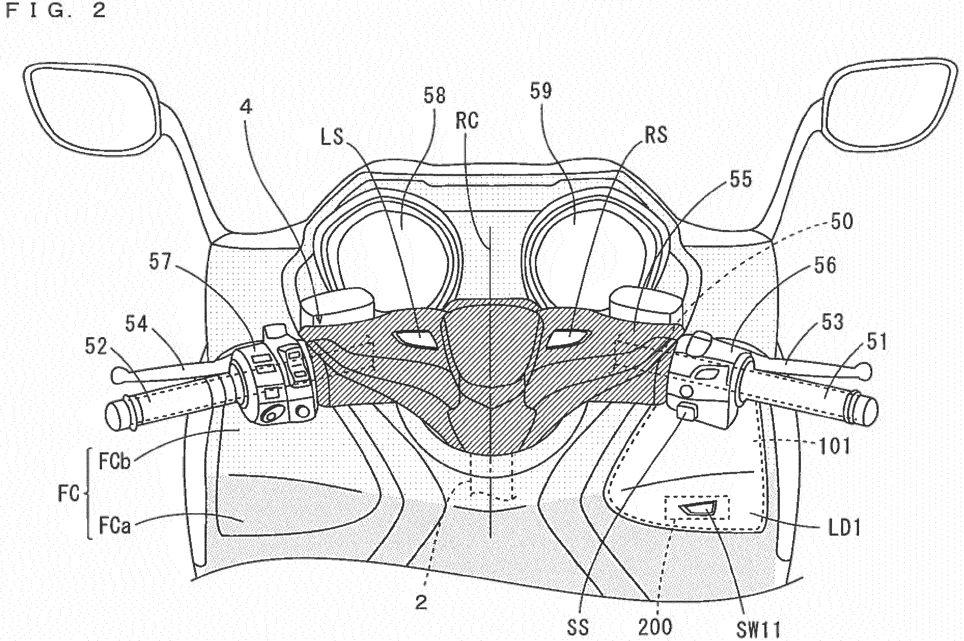

Fig. 2 is an external perspective view showing a configuration of the handle 4. In Fig. 2, an appearance of the handle 4 and its surroundings as viewed from the rider who is seated on the seat 5 of Fig. 1 is shown. As shown in Fig. 2, the handle 4 includes a handle bar 50 that extends to the left and right. An accelerator grip 51 is provided at a right portion of the handle bar 50, and a fixed grip 52 is provided at a left portion of the handle bar 50. The accelerator grip 51 is operated, so that an intake amount to the engine 10 of Fig. 1 is adjusted, and then the output of the engine 10 is adjusted.

A brake lever 53 for activating the brake of the front wheel 3 (Fig. 1) is arranged at a position further forward than the accelerator grip 51, and a brake lever 54 for activating the brake of the rear wheel 7 (Fig. 1) is arranged at a position further forward than the fixed grip 52. A handle cover 55 is provided between the accelerator grip 51 and the fixed grip 52 to extend from a portion of the handle bar 50 located at a position further rightward than a rotation center axis RC of the steering shaft 2 to a portion of the handle bar 50 located at a position further leftward than the rotation center axis RC of the steering shaft 2. In Fig. 2, a hatching pattern is applied to the handle cover 55 in order to facilitate understanding. The handle cover 55 turns together with the handle bar 50. A right switch RS and a left switch LS are provided on the upper surface of the handle cover 55. The right switch RS is located at a position further rightward than the rotation center axis RC of the steering shaft 2, and the left switch LS is located at a position further leftward than the rotation center axis RC of the steering shaft 2. The right switch RS and the left switch LS are mainly operated when the motorcycle 100 is not travelling. Functions to be executed by the right switch RS and the left switch LS will be described below.

A right switch box 56 is provided at a portion of the handle bar 50 located at a position further rightward than the handle cover 55 and adjacent to the accelerator grip 51, and a left switch box 57 is provided at a portion of the handle bar 50 located at a position further leftward than the handle cover 55 and adjacent to the fixed grip 52. A starter switch SS is provided at the right switch box 56. Functions of the starter switch SS will be described below. Various types of switches other than the starter switch SS are provided at the switch boxes 56, 57. The various types of switches include a direction indicator switch that allows a direction indicator (a winker) to flicker, a passing light switch that lights up high beams of headlights, a headlight up-and-down switch that changes directions of the headlights in the upward and downward directions, a horn switch that allows a horn to make a sound and the like.

A front cover FC is provided to surround the steering shaft 2 to be fixed to the main body 100A of Fig. 1. The front cover FC includes an inner cover FCa and an upper cover FCb. In Fig. 2, different dotted patterns are applied to the inner cover FCa and the upper cover FCb in order to facilitate understanding. The inner cover FCa extends in the vehicle up-and-down direction to face the rider at a position further downward than the handle bar 50 and further rearward than the steering shaft 2. The upper cover FCb extends obliquely upward and forward from the upper end of the inner cover FCa.

A front storage 101 that forms a storage space for storing a relatively small object is provided at a right portion of the front cover FC. A front storage lid LD1 is provided at the front storage 101 to be openable and closable. The storage space of the front storage 101 is exposed when the front storage lid LD1 is opened. A press-type open-close switch SW11 is provided on the front storage lid LD1. The rider operates the open-close switch SW11 in order to open the front storage lid LD1. Further, an open-close restrictor 200 is provided at the front storage 101. The open-close restrictor 200 is switched between a releasing state and a preventing state, the releasing state being a state where the front storage lid LD1 is openable and closable and the preventing state being a state where the front storage lid LD1 is prevented from being opened and closed.

A speed meter 58 and a rotation speed meter 59 are provided at a left portion and a right portion of the upper cover FCb located at a position further forward than the handle bar 50. The speed meter 58 and the rotation speed meter 59 are provided to be fixed to the main body 100A of Fig. 1, thereby not moving together with the turning of the handle bar 50.

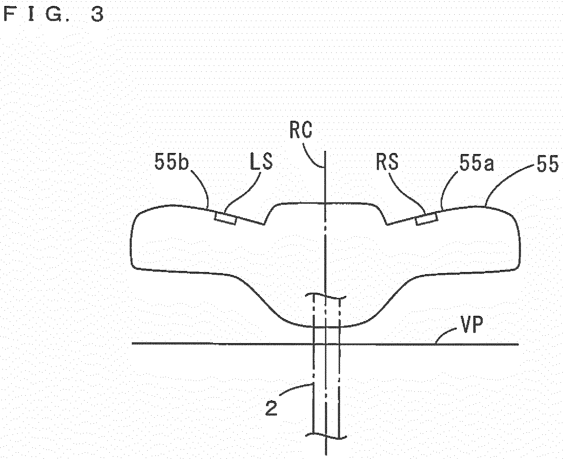

Fig. 3 is a schematic diagram for explaining the shape of the handle cover 55. As shown in Fig. 3, the handle cover 55 has inclined surfaces 55a, 55b. The inclined surface 55a is located at a position further rightward than the rotation center axis RC of the steering shaft 2, and the inclined surface 55b is located at a position further leftward than the rotation center axis RC of the steering shaft 2. In Fig. 3, a virtual plane VP orthogonal to the steering shaft 2 is shown. Each of the inclined surfaces 55a, 55b is inclined with respect to the virtual plane VP, and as a distance between each of the positions on the inclined surfaces 55a, 55b and a rotation center axis RC of the steering shaft 2 is configured to increase, a distance between the virtual plane VP and each of the positions on the inclined surfaces 55a, 55b is configured to gradually increase. The right switch RS is provided on the inclined surface 55a, and the left switch LS is provided on the inclined surface 55b.

When the motorcycle 100 is stopped continuously (during parking), the steering shaft 2 is prevented from turning by the steering fixer LC1 of Fig. 1 with the handle bar 50 turned to a maximum with respect to the main frame 1 of Fig. 1. Fig. 4 is a diagram showing the handle bar 50 being turned to the maximum. As shown in Fig. 4, when the handle bar 50 is largely turned, the handle cover 55 overlaps with at least one of the speed meter 58 and the rotation speed meter 59 in a line-of-sight direction of the rider. In the example of Fig. 4, the handle bar 50 is largely turned to the left, and the handle cover 55 overlaps with the rotation speed meter 59. When the handle bar 50 is largely turned to the right, the handle cover 55 overlaps with the speed meter 58. In this case, the right switch RS and the left switch LS provided on the handle cover 55 are likely to come into the field of view of the rider, and the rider can intuitively recognize that the motorcycle 100 is not travelling. Thus, the rider can be prompted to operate each of the right switch RS and the left switch LS. Further, because the right switch RS and the left switch LS are respectively provided at positions spaced apart from the rotation center axis RC of the steering shaft 2, when the handle bar 50 is turned, the positions of the right switch RS and the left switch LS are changed in the line-of-sight direction of the rider. Thus, attention of the rider is easily directed to the right switch RS and the left switch LS. Therefore, when the motorcycle 100 is not travelling, the rider is prevented from forgetting to perform a necessary operation of each of the right switch RS and the left switch LS.

Further, in the present embodiment, the right switch RS is arranged to overlap with the rotation speed meter 59 in the line-of-sight direction of the rider with the handle bar 50 turned to the left to the maximum. The left switch LS is arranged to overlap with the speed meter 58 in the line-of-sight direction of the rider with the handle bar 50 turned to the right to the maximum. Thus, the rider can be more effectively prompted to operate each of the right switch RS and the left switch LS when the motorcycle 100 is not travelling.

Further, in the present embodiment, the right switch RS and the left switch LS are respectively provided on the inclined surfaces 55a, 55b of the handle cover 55. Therefore, even in the case where the handle bar 50 is largely turned to the left such that the right switch RS is located at a distant position from the rider, the right switch RS is directed to the rider. Further, even in the case where the handle bar 50 is largely turned to the right such that the left switch LS is located at a distant position from the rider, the left switch LS is directed to the rider. Thus, a reduction in operability of each of the right switch RS and the left switch LS due to the turning of the handle bar 50 is inhibited.

Further, in the present embodiment, a distance between the right switch RS and the rotation center axis RC of the steering shaft 2 and a distance between the left switch LS and the rotation center axis RC of the steering shaft 2 are respectively set shorter than a distance between the starter switch SS and the right switch RS. Thus, even in the case where the handle bar 50 is turned, the positions of the right switch RS and the left switch LS are not changed excessively largely. Thus, the attention of the rider can be directed to the right switch RS and the left switch LS while a reduction in operability of the right switch RS and the left switch LS is inhibited.

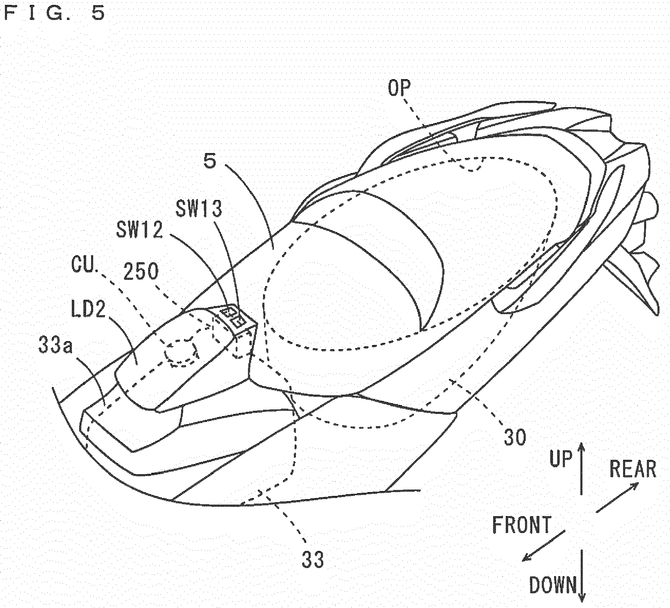

Fig. 5 is an external perspective view of a rear portion of the motorcycle 100. As shown in Fig. 5, the rear storage 30 has an upper opening OP. The seat 5 is provided on the rear storage 30 to be openable and closable. The upper opening OP of the rear storage 30 is exposed when the seat 5 is opened. A tank cover 33a is provided at a position further forward than the seat 5 to surround part of the fuel tank 33. A fuel lid LD2 is provided at the tank cover 33a to be openable and closeable. A fuel cap CU attached to a fuel filler opening of the fuel tank 33 is exposed when the fuel lid LD2 is opened. In this state, the fuel cap CU is removed, and the fuel is supplied to the fuel tank 33.

Press-type open-close switches SW12, SW13 are arranged between the seat 5 and the fuel lid LD2. The rider operates the open-close switch SW12 in order to open the seat 5 and operates the open-close switch SW13 in order to open the fuel lid LD2. A press restrictor 250 is provided under the open-close switches SW12, SW13. The press restrictor 250 is switched between a releasing state and a preventing state, the releasing state being a state where the open-close switches SW12, SW13 can be pressed and the preventing state being a state where the open-close switches SW12, SW13 are prevented from being pressed.

### (3) Operation of Switches

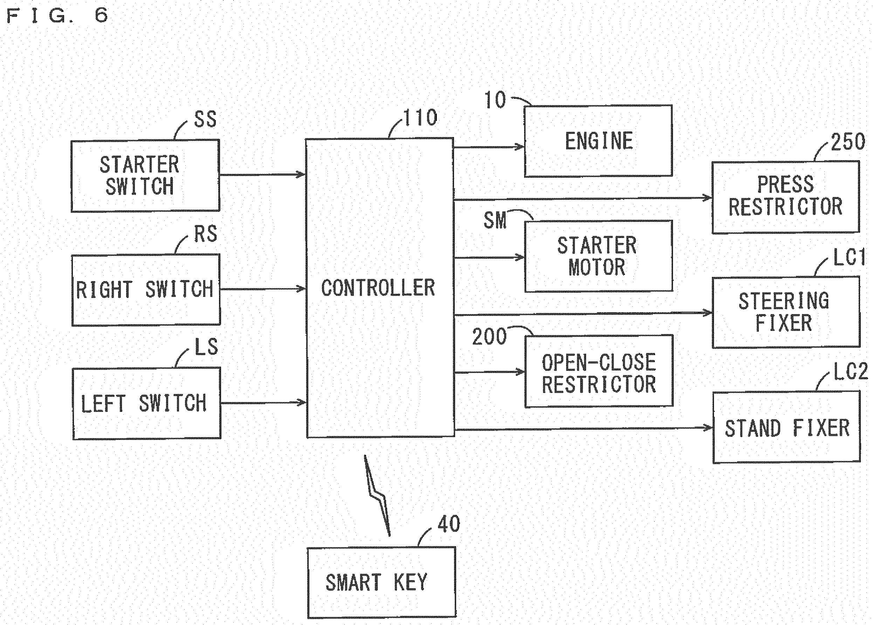

Fig. 6 is a block diagram for explaining a control system of the motorcycle 100. The motorcycle 100 includes a controller 110. The controller 110 includes a CPU (Central Processing Unit) and a memory, for example, and performs user authentication by a communication system (a smart key system) using a portable device. In the present example, a smart key 40 is used as the portable device. In the case where the starter switch SS is operated with the motorcycle 100 turned off (with electric power not supplied to each electric component), the controller 110 is started. At this time, the starter switch SS transmits an authentication instruction for allowing the controller 110 to perform the user authentication to the controller 110. In response to the authentication instruction from the starter switch SS, the controller 110 detects the smart key 40 present within a predetermined range around the motorcycle 100 and performs the user authentication of the detected smart key 40. In the case where the smart key 40 is the authorized smart key 40, the user authentication by the controller 110 is successful. In the case where the user authentication is successful, the motorcycle 100 is turned on, and electric power is supplied to each electric component.

In the case where the user authentication is successful, the controller 110 controls the engine 10, the starter motor SM, the open-close restrictor 200, the press restrictor 250, the steering fixer LC1 and the stand fixer LC2 in response to an instruction from each of the starter switch SS, the right switch RS and the left switch LS. The engine 10, the starter motor SM, the open-close restrictor 200, the press restrictor 250, the steering fixer LC1 and the stand fixer LC2 are examples of a target of control. On the other hand, in the case where the user authentication is not successful, the controller 110 does not accept an instruction from each of the starter switch SS, the right switch RS and the left switch LS. Examples of specific operations of the starter switch SS, the right switch RS and the left switch LS will be described below. In the following description, a short press means that a switch is pressed for a time period shorter than a predetermined time period, and a long press means that a switch is pressed continuously for the predetermined time period or longer.

In the case where the starter switch SS is short-pressed or long-pressed, the starter switch SS transmits an operation instruction for operating the engine 10 to the controller 110. In response to the operation instruction from the starter switch SS, the controller 110 controls the engine 10 and the starter motor SM such that the operation of the engine 10 is started. Specifically, the crankshaft of the engine 10 is rotated by the starter motor SM, and a combustion operation of a fuel-air mixture in the engine 10 is started. In the present example, because the user authentication is performed by the operation of the starter switch SS, the rider can easily perform an operation for the user authentication while holding the accelerator grip 51 and operate the engine 10 right after the successful user authentication.

During the operation of the engine 10, in the case where the right switch RS is short-pressed or long-pressed, the right switch RS transmits a stop instruction for stopping the operation of the engine 10 to the controller 110. In response to the stop instruction from the right switch RS, the controller 110 stops the combustion operation of the engine 10. Further, the controller 110 may turn off the motorcycle 100 after stopping the combustion operation of the engine 10.

Either during the operation or the stop of the engine 10, in the case where the left switch LS is short-pressed, the left switch LS transmits a first switch instruction for switching the states of the open-close restrictor 200 and the press restrictor 250 to the controller 110. In response to the first switch instruction from the left switch LS, the controller 110 switches the states of the open-close restrictor 200 and the press restrictor 250. Specifically, when the open-close restrictor 200 and the press restrictor 250 are respectively in the releasing state, in the case where the left switch LS is short-pressed, the open-close restrictor 200 and the press restrictor 250 are respectively switched to the preventing state. When the open-close restrictor 200 and the press restrictor 250 are respectively in the preventing state, in the case where the left switch LS is short-pressed, the open-close restrictor 200 and the press restrictor 250 are respectively switched to the releasing state.

The rider can open the front storage lid LD1 (Fig. 2), the fuel lid LD2 (Fig. 5) and the seat 5 (Fig. 5) by operating the left switch LS at any time point and switching the states of the open-close restrictor 200 and the press restrictor 250 to the releasing state. Further, the rider can prevent another person from opening the front storage lid LD1 (Fig. 1), the fuel lid LD2 (Fig. 5) and the seat 5 (Fig. 5) by operating the left switch LS and switching the states of the open-close restrictor 200 and the press restrictor 250 to the preventing state.

In the case where the motorcycle 100 is turned off with the open-close restrictor 200 and the press restrictor 250 kept in the releasing state, the controller 110 may switch the states of the open-close restrictor 200 and the press restrictor 250 to the preventing state. Further, the controller 110 may switch the states of the open-close restrictor 200 and the press restrictor 250 to the releasing state when the motorcycle 100 is turned on. Further, in the case where a constant time period elapses with the open-close restrictor 200 and the press restrictor 250 kept in the releasing state or the case where a travelling speed of the motorcycle 100 becomes higher than a specified value, the controller 110 may switch the states of the open-close restrictor 200 and the press restrictor 250 to the preventing state.

In the case where the right switch RS is short-pressed during the stop of the engine 10, the right switch RS transmits a second switch instruction for switching the state of the steering fixer LC1 to the preventing state to the controller 110. At this time, in the case where the steering shaft 2 of Fig. 1 is located at the above-mentioned constant rotation position, the controller 110 switches the state of the steering fixer LC1 to the preventing state in response to the second switch instruction from the right switch RS. Thus, the steering shaft 2 is fixed to the constant rotation position.

Further, in the case where the right switch RS is long-pressed during the stop of the engine 10, the right switch RS transmits a third switch instruction for switching the state of the stand fixer LC2 to the preventing state to the controller 110. At this time, in the case where the stand ST of Fig. 1 is in the supporting state, the controller 110 switches the state of the stand fixer LC2 to the preventing state in response to the third switch instruction from the right switch RS. Thus, the state of the stand ST is fixed to the supporting state. Further, when the engine 10 is stopped, and the stand ST is in the supporting state, in the case where the left switch LS is long-pressed, the left switch LS transmits a parking instruction for allowing a hazard lamp (the direction indicator) (not shown) to flicker to the controller 110. In response to the parking instruction from the left switch LS, the controller 110 allows the hazard lamp (not shown) to flicker.

In the present example, because the right switch RS and the left switch LS are press-type switches, it is possible to reduce the measurement of each of the right switch RS and the left switch LS. Thus, the right switch RS and the left switch LS can be arranged even on the handle cover 55 on which a large flat surface is difficult to be obtained. Further, in the present example, the right switch RS and the left switch LS transmit the different instructions to the different targets of control depending on the time periods for which the right switch RS and the left switch LS are pressed. Thus, it is possible to control various types of targets of control by operations of the right switch RS and the left switch LS without an increase in number of switches.

The contents of instruction of the right switch RS and the left switch LS do not have to be limited to the present example but may be arbitrarily set. For example, an authentication instruction may be transmitted from the right switch RS or the left switch LS when the right switch RS or the left switch LS is short-pressed or long-pressed.

### (4) Press Restrictor

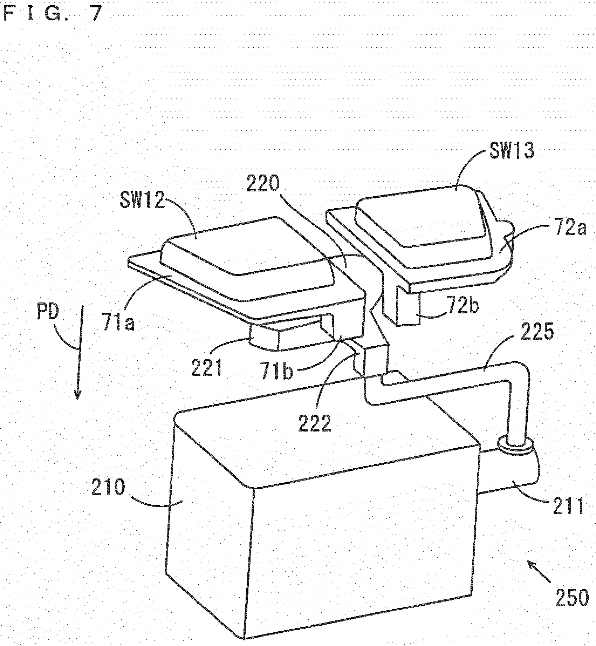

Fig. 7 is a schematic perspective view for explaining an example of a specific configuration of the press restrictor 250. In Fig. 7, an arrow indicating a press direction PD of the open-close switches SW12, SW13 is shown. As shown in Fig. 7, the open-close switch SW12 includes a main body 71a and a projection 71b, and the open-close switch SW13 includes a main body 72a and a projection 72b. The main bodies 71a, 72b are biased in a direction opposite to the press direction PD by biasing members (not shown). The projections 71b, 72b are respectively provided to project in the press direction PD from the lower surfaces of the main bodies 71a, 72a.

The press restrictor 250 of Fig. 7 includes a solenoid actuator 210, a plate-shape lock member 220 and a bar-shape coupling member 225. The solenoid actuator 210 moves a bar-shape movable member 211 in one direction between a projection position and a retraction position. The lock member 220 is arranged to be substantially orthogonal to the press direction PD. The lock member 220 includes engaging portions 221, 222 that project in directions different from each other within a plane substantially orthogonal to the press direction PD. The coupling member 225 is curved and extends between the movable member 211 and the lock member 220. One end of the coupling member 225 is coupled to the tip end of the movable member 211 to be turnable, and the other end of the coupling member 225 is coupled to the engaging portion 222 of the lock member 220 to be turnable.

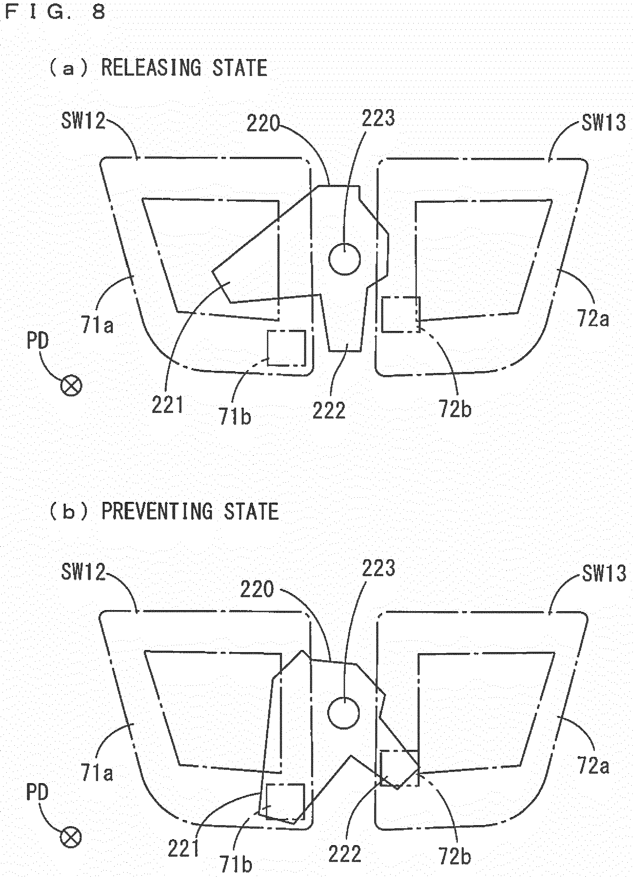

Figs. 8(a) and 8(b) are schematic plan views for explaining the operation of the press restrictor 250. In Fig. 8(a), the states of the open-close switches SW12, SW13 and the lock member 220 in the case where the press restrictor 250 is in the releasing state are shown. In Fig. 8(b), the states of the open-close switches SW12, SW13 and the lock member 220 in the case where the press restrictor 250 is in the preventing state are shown. As shown in Figs. 8(a) and 8(b), a turning shaft 223 is attached to the lock member 220, and the lock member 220 can be turned about the turning shaft 223 within a plane substantially orthogonal to the press direction PD. As described above, the lock member 220 is coupled to the movable member 211 of the solenoid actuator 210 via the coupling member 225 of Fig. 7. Therefore, the lock member 220 turns about the turning shaft 223 with the movement of the movable member 211 of Fig. 7 in the one direction.

The controller 110 of Fig. 6 switches the state of the press restrictor 250 between the releasing state and the preventing state by controlling the solenoid actuator 210 and moving the movable member 211 to the retraction position or the projection position. In the releasing state, the movable member 211 of Fig. 7 is located at the retraction position. In this case, as shown in Fig. 8(a), the engaging portions 221, 222 of the lock member 220 are not located at positions on movement paths, which extend in the press direction PD, of the projection 71b of the open-close switch SW12 and the projection 72b of the open-close switch SW13. Therefore, the open-close switch SW12 and the open-close switch SW13 are not prevented from being pressed by the lock member 220.

On the other hand, in the preventing state, the movable member 211 of Fig. 7 is at the projection position. In this case, as shown in Fig. 8(b), the engaging portions 221, 222 of the lock member 220 are respectively located at positions on the movement paths, which extend in the press direction PD, of the projection 71b of the open-close switch SW12 and the projection 72b of the open-close switch SW13. Thus, the open-close switches SW12, SW13 are prevented from being pressed by the lock member 220.

In the present example, the movable member 211 of the solenoid actuator 210 does not directly prevent the open-close switch SW12, SW13 from being pressed, but the lock member 220 coupled to the movable member 211 via the coupling member 225 prevents the open-close switches SW12, SW13 from being pressed. Therefore, operation loads of the open-close switches SW12, SW13 are not directly applied to the solenoid actuator 210. Thus, a large-size solenoid actuator 210 having high load resistance does not have to be used, and a small-size solenoid actuator 210 can be used. Further, the solenoid actuator 210 can be arranged in the press direction PD of the open-close switches SW12, SW13. Thus, the press restrictor 250 can be made compact.

### (5) Effects

In the motorcycle 100 according to the present embodiment, the right switch RS and the left switch LS are provided on the handle cover 55 that extends from a position further rightward than the steering shaft 2 to a position further leftward than the steering shaft 2. When the motorcycle 100 is not travelling, for example, in the case where the handle bar 50 is largely turned, the handle cover 55 overlaps with at least one of the speed meter 58 and the rotation speed meter 59 in the line-of-sight direction of the rider. Therefore, the right switch RS and the left switch LS are likely to come into the field of view of the rider. Thus, the attention of the rider can be directed to the right switch RS and the left switch LS, and the rider can be prompted to operate the right switch RS and the left switch LS. Therefore, the rider is prevented from forgetting to perform a necessary operation of each of the right switch RS and the left switch LS. Further, because the right switch RS and the left switch LS are not provided at the right switch box 56 and the left switch box 57 but provided on the handle cover 55, a reduction in operability of the other switches provided at the right switch box 56 and the left switch box 57 is prevented.

Further, because the right switch RS and the left switch LS are provided on the handle cover 55 located at a relatively high position, visibility and operability for the rider are high. On the other hand, another person who is not the authenticated owner may operate the right switch RS or the left switch LS for vandalism or criminal purposes. Then, in the present embodiment, operations of the right switch RS and the left switch LS are enabled only in the case where the user authentication is successful. This improves security of the vehicle.

### (6) Other Embodiments

### (6-1)

While the right switch RS and the left switch LS are provided on the handle cover 55 as the second switch in the above-mentioned embodiment, the number of second switches is not limited to two.

Three or more than three switches may be provided.

Further, although the right switch RS and the left switch LS of the above-mentioned embodiment are press-type switches, other types of switches such as a slide-type switch or a toggle switch may be provided as the second switch.

### (6-2)

While the engine 10 is used as a thrust force generator in the above-mentioned embodiment, a motor may be used as the thrust force generator. Further, a rotary electrical machine (a starter generator) having functions of a motor and a generator may be used instead of the starter motor 11.

### (6-3)

While the present invention is an example in which the present invention is applied to a motorcycle, the invention is not limited to this. The present invention may be applied to another straddled vehicle such as a motor tricycle or an ATV (All Terrain Vehicle).

### (7) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the motorcycle 100 is an example of a straddled vehicle, the main body 100A is an example of a vehicle main body, the main frame 1 is an example of a vehicle frame, the steering shaft 2 is an example of a steering shaft, the handle bar 50 is an example of a handle bar, the accelerator grip 51 is an example of a right grip, the fixed grip 52 is an example of a left grip, the handle cover 55 is an example of a handle cover, the right switch box 56 is an example of a right switch box, the left switch box 57 is an example of a left switch box, the speed meter 58 is an example of a meter, and the starter switch SS is an example of a first switch, and the right switch RS and the left switch LS are examples of a second switch. Further, the controller 110 is an example of a controller, and the engine 10 is an example of a thrust force generator.

As each of constituent elements recited in the claims, various other elements having configurations or functions described in the claims can be also used.

### INDUSTRIAL APPLICABILITY

The present invention can be effectively utilized for various types of straddled vehicles.

## Claims

1. A straddled vehicle (100) comprising:
a vehicle main body (100A) that includes a vehicle frame (1);
a steering shaft (2) provided to be turnable with respect to the vehicle frame (1);
a handle bar (50) provided at the steering shaft (2) to extend in a vehicle width direction;
left and right grips (52 and 51) respectively provided at left and right ends of the handle bar (50);
a handle cover (55) provided between the left and right grips (52 and 51) to extend from a first portion of the handle bar (50) located at a position further rightward than the steering shaft (2) to a second portion of the handle bar (50) located at a position further leftward than the steering shaft (2) and configured to turn together with the handle bar (50);
a right switch box (56) provided at a portion of the handle bar (50) located at a position further rightward than the handle cover (55) and adjacent to the right grip (51);
a meter (58) that is provided at a position further forward than the handle cover (55) to be fixed to the vehicle main body (100A) and configured to display at least a travelling speed of the vehicle;
a first switch; and
a second switch provided on the handle cover (55),
**wherein** the second switch includes a left switch (LS) provided at a first position on an upper surface of the handle cover (55), and a right switch (RS) provided at a second position on the upper surface of the handle cover (55),
the first position being located between a rotation center axis (RC) of the steering shaft (2) and the second portion of the handle bar (50), the second position being located between the rotation center axis (RC) of the steering shaft (2) and the first portion of the handle bar (50),
**characterized by**
a left switch box (57) provided at a position of the handle bar (50) located at a position further leftward than the handle cover (55) and adjacent to the left grip (52);
wherein the first switch is provided at at least one of the left switch box (57) and the right switch box (56);
wherein the handle cover (55) has first and second inclined surfaces (55a, 55b) inclined with respect to a virtual plane (VP) orthogonal to the steering shaft (2),
the fist inclined surface (55a) being located at a position further rightward than the rotation center axis (RC) of the steering shaft (2), the second inclined surface (55b) being located at a position further leftward than the rotation center axis (RC) of the steering shaft (2),
wherein, as a distance between each of the positions on the inclined surfaces (55a, 55b) and the rotation center axis (RC) of the steering shaft (2) is configured to increase, a distance between the virtual plane (VP) and each of the positions on the inclined surfaces (55a, 55b) is configured to gradually increase;
and wherein the left switch (LS) is provided on the second inclined surface (55b), and the right switch (RS) is provided on the first inclined surface (55a).

2. The straddled vehicle (100) according to claim 1, wherein
the second switch is configured to transmit an instruction to a target of control to be controlled when the vehicle is not travelling.

3. The straddled vehicle (100) according to claim 1 or 2, further comprising a seat (5) provided at the vehicle main body (100A), wherein
the handle bar (50) is provided to be turnable within a predetermined angular range with respect to the vehicle frame (1),
wherein the first position of the left switch (LS) or the second position of the right switch (RS) on the upper surface of the handle cover (55) overlaps with the meter (58) in a line-of-sight direction of a rider who is seated on the seat (5) with the handle bar (50) turned to a maximum within the angular range.

4. The straddled vehicle (100) according to any one of claims 1 to 3, wherein
the second switch is configured to transmit an instruction when being pressed.

5. The straddled vehicle (100) according to claim 4, wherein
the second switch is configured to transmit different instructions depending on a length of a time period during which the second switch is pressed.

6. The straddled vehicle (100) according to claim 5, wherein
the different instructions transmitted by the second switch are instructions for different targets of control.

7. The straddled vehicle (100) according to any one of claims 1 to 6, wherein
a distance between the left switch (LS) and the rotation center axis (RC) of the steering shaft (2) is shorter than a distance between the left switch (LS) and the first switch, and
wherein a distance between the right switch (RS) and the rotation center axis (RC) of the steering shaft (2) is shorter than a distance between the right switch (RS) and the first switch.

8. The straddled vehicle (100) according to any one of claims 1 to 7, further comprising a controller (110) that is configured to perform user authentication by a communication system using a portable device, wherein
the controller (110) is configured to allow the user authentication to be successful in the case where an authenticated portable device has been detected, is configured to accept an instruction transmitted by the second switch in the case where the user authentication is successful and does not accept an instruction transmitted by the second switch in the case where the user authentication is not successful.

9. The straddled vehicle (100) according to claim 8, wherein
the first switch is configured to transmit an instruction for allowing the controller (110) to perform the user authentication.

10. The straddled vehicle (100) according to any one of claims 1 to 9, further comprising a thrust force generator (10) that is configured to generate a thrust force of the vehicle, and
the second switch is configured to transmit an instruction for stopping generation of the thrust force by the thrust force generator (10).

## Patentansprüche

1. Spreizsitz-Fahrzeug (100), das umfasst:
eine Fahrzeug-Hauptkarosserie (100A), die einen Fahrzeug-Rahmen (1) enthält;
eine Lenkwelle (2), die in Bezug auf den Fahrzeug-Rahmen (1) gedreht werden kann;
eine Lenkstange (50), die sich an der Lenkwelle (2) befindet und sich in einer Fahrzeug-Breitenrichtung erstreckt;
einen linken und einen rechten Griff (52 und 51), die sich an einem linken bzw. einem rechten Ende der Lenkstange (50) befinden;
eine Stangen-Verkleidung (55), die sich zwischen dem linken und dem rechten Griff (52 und 51) befindet und sich von einem ersten Abschnitt der Lenkstange (50), der sich an einer Position weiter rechts als die Lenkwelle (2) befindet, zu einem zweiten Abschnitt der Lenkstange (50) erstreckt, der sich an einer Position weiter links als die Lenkwelle (2) befindet, und die so eingerichtet ist, dass sie sich zusammen mit der Lenkstange (50) dreht;
eine rechte Schalter-Armatur (56), die an einem Abschnitt der Lenkstange (50) vorhanden ist, der sich an einer Position weiter rechts als die Stangen-Verkleidung (55) befindet, und die an den rechten Griff (51) angrenzt;
eine Anzeige (58), die an einer Position weiter vorn als die Stangen-Verkleidung (55) vorhanden ist, an der Fahrzeug-Hauptkarosserie (100A) befestigt und so eingerichtet ist, dass sie wenigstens eine Fahrgeschwindigkeit des Fahrzeugs anzeigt;
einen ersten Schalter; sowie
einen zweiten Schalter, der an der Stangen-Verkleidung (55) vorhanden ist,
wobei der zweite Schalter einen linken Schalter (LS), der an einer ersten Position an einer oberen Fläche der Stangen-Verkleidung (55) vorhanden ist, und einen rechten Schalter (RS) enthält, der an einer zweiten Position an der oberen Fläche der Stangen-Verkleidung (55) vorhanden ist,
wobei sich die erste Position zwischen einer Dreh-Mittelachse (RC) der Lenkwelle (2) und dem zweiten Abschnitt der Lenkstange (50) befindet und sich die zweite Position zwischen der Dreh-Mittelachse (RC) der Lenkwelle (2) und dem ersten Abschnitt der Lenkstange (50) befindet,
**gekennzeichnet durch**
eine linke Schalter-Armatur (57), die an einer Position der Lenkstange (50) vorhanden ist, die sich an einer Position weiter links als die Stangen-Verkleidung (55) befindet, und die an den linken Griff (52) angrenzt;
wobei der erste Schalter an der linken Schalter-Armatur (57) oder/und der rechten Schalter-Armatur (56) vorhanden ist;
die Stangen-Verkleidung (55) eine erste und eine zweite geneigte Fläche (55a, 55b) aufweist, die in Bezug auf eine virtuelle Ebene (VP) senkrecht zu der Lenkwelle (2) geneigt sind,
die erste geneigte Fläche (55a) sich an einer Position weiter rechts als die Dreh-Mittelachse (RC) der Lenkwelle (2) befindet und sich die zweite geneigte Fläche (55b) an einer Position weiter links als die Dreh-Mittelachse (RC) der Lenkwelle (2) befindet,
wobei, wenn ein Abstand zwischen jeder der Positionen an den geneigten Flächen (55a, 55b) und der Dreh-Mittelachse (RC) der Lenkwelle (2) zunimmt, ein Abstand zwischen der virtuellen Ebene (VP) und jeder der Positionen an den geneigten Flächen (55a, 55b) allmählich zunimmt;
und der linke Schalter (LS) an der zweiten geneigten Fläche (55b) vorhanden ist und der rechte Schalter (RS) an der ersten geneigten Fläche (55a) vorhanden ist.

2. Spreizsitz-Fahrzeug (100) nach Anspruch 1, wobei
der zweite Schalter so eingerichtet ist, dass er einen Befehl zu einem Steuerungs-Objekt sendet, das gesteuert wird, wenn das Fahrzeug nicht fährt.

3. Spreizsitz-Fahrzeug (100) nach Anspruch 1 oder 2, das des Weiteren einen Sitz (5) umfasst, der sich an der Fahrzeug-Hauptkarosserie (100A) befindet, wobei
die Lenkstange (50) innerhalb eines vorgegebenen Winkelbereiches in Bezug auf den Fahrzeug-Rahmen (1) gedreht werden kann,
und sich die erste Position des linken Schalters (LS) oder die zweite Position des rechten Schalters (RS) an der oberen Fläche der Stangen-Verkleidung (55) in einer Sichtverbindungs-Richtung eines Fahrers, der auf dem Sitz (5) sitzt, mit der Anzeige (58) überlappt, wenn die Lenkstange (50) um ein Maximum innerhalb des Winkelbereiches gedreht ist.

4. Spreizsitz-Fahrzeug (100) nach einem der Ansprüche 1 bis 3, wobei
der zweite Schalter so eingerichtet ist, dass er einen Befehl überträgt, wenn er gedrückt wird.

5. Spreizsitz-Fahrzeug (100) nach Anspruch 4, wobei
der zweite Schalter so eingerichtet ist, dass er in Abhängigkeit von einer Länge eines Zeitraums, in dem der zweite Schalter gedrückt wird, unterschiedliche Befehle überträgt.

6. Spreizsitz-Fahrzeug (100) nach Anspruch 5, wobei
die durch den zweiten Schalter übertragenen unterschiedlichen Befehle Befehle für unterschiedliche Steuerungs-Objekte sind.

7. Spreizsitz-Fahrzeug (100) nach einem der Ansprüche 1 bis 6, wobei
ein Abstand zwischen dem linken Schalter (LS) und der Dreh-Mittelachse (RC) der Lenkwelle (2) kürzer ist als ein Abstand zwischen dem linken Schalter (LS) und dem ersten Schalter, und
ein Abstand zwischen dem rechten Schalter (RS) und der Dreh-Mittelachse (RC) der Lenkwelle (2) kürzer ist als ein Abstand zwischen dem rechten Schalter (RS) und dem ersten Schalter.

8. Spreizsitz-Fahrzeug (100) nach einem der Ansprüche 1 bis 7, das des Weiteren eine Steuerungseinrichtung (110) umfasst, die so eingerichtet ist, dass sie Benutzer-Authentifizierung über ein Kommunikations-System unter Verwendung einer tragbaren Vorrichtung durchführt, wobei
die Steuerungseinrichtung (110) so eingerichtet ist, dass sie zulässt, dass die Benutzer-Authentifizierung erfolgreich ist, wenn eine authentifizierte tragbare Vorrichtung erfasst worden ist, so eingerichtet ist, dass sie einen durch den zweiten Schalter übertragenen Befehl annimmt, wenn die Benutzer-Authentifizierung erfolgreich ist, und einen durch den zweiten Schalter übertragenen Befehl nicht annimmt, wenn die Benutzer-Authentifizierung nicht erfolgreich ist.

9. Spreizsitz-Fahrzeug (100) nach Anspruch 8, wobei:
der erste Schalter so eingerichtet ist, dass er einen Befehl überträgt, der es der Steuerungseinrichtung (110) gestattet, die Benutzer-Authentifizierung durchzuführen.

10. Spreizsitz-Fahrzeug (100) nach einem der Ansprüche 1 bis 9, das des Weiteren eine Antriebskraft-Erzeugungseinrichtung (10) umfasst, die so eingerichtet ist, dass sie eine Antriebskraft des Fahrzeugs erzeugt, und
der zweite Schalter so eingerichtet ist, dass er einen Befehl zum Unterbrechen von Erzeugung der Antriebskraft durch die Antriebskraft-Erzeugungseinrichtung (10) überträgt.

## Revendications

1. Véhicule à enfourcher (100) comprenant :
un corps principal de véhicule (100A) qui comprend un châssis de véhicule (1) ;
un arbre de direction (2) pourvu de manière tournante par rapport au châssis de véhicule (1) ;
un guidon (50) pourvu sur l'arbre de direction (2) pour s'étendre en direction de la largeur du véhicule ;
des poignées gauche et droite (52 et 51) pourvues respectivement sur les extrémités gauche et droite du guidon (50) ;
un carénage de guidon (55) pourvu entre les poignées gauche et droite (52 et 51) pour s'étendre depuis une première portion du guidon (50) qui se trouve à une position plus à droite que l'arbre de direction (2) jusqu'à une deuxième portion du guidon (50) qui se trouve à une position plus à gauche que l'arbre de direction (2) et configuré pour tourner conjointement au guidon (50) ;
un boîtier de commutation droit (56) pourvu sur une portion du guidon (50) qui se trouve à une position plus à droite que le carénage de guidon (55) et adjacente à la poignée droite (51) ;
un compteur (58) qui est pourvu à une position plus en avant que le carénage de guidon (55) à fixer sur le corps principal du véhicule (100A) et configuré pour afficher au moins une vitesse de déplacement du véhicule ;
un premier commutateur ; et
un deuxième commutateur pourvu sur le carénage de guidon (55),
dans lequel le deuxième commutateur comprend un commutateur gauche (LS) pourvu à une première position sur une surface supérieure du carénage de guidon (55), et un commutateur droit (RS) pourvu à une deuxième position sur la surface supérieure du carénage de guidon (55),
la première position étant située entre un axe du centre de rotation (RC) de l'arbre de direction (2) et la deuxième portion du guidon (50), la deuxième position étant située entre l'axe du centre de rotation (RC) de l'arbre de direction (2) et la première portion du guidon (50),
**caractérisé par**
un boîtier de commutation gauche (57) pourvu à une position du guidon (50) qui se trouve à une position plus à gauche que le carénage de guidon (55) et adjacente à la poignée gauche (52) ;
dans lequel le premier commutateur est pourvu sur au moins un boîtier parmi le boîtier de commutation gauche (57) et le boîtier de commutation droit (56) ;
dans lequel le carénage de guidon (55) comporte des première et deuxième surfaces inclinées (55a, 55b) qui sont inclinées par rapport à un plan virtuel (VP) orthogonal à l'arbre de direction (2),
la première surface inclinée (55a) se trouvant à une position plus à droite que l'axe du centre de rotation (RC) de l'arbre de direction (2), la deuxième surface inclinée (55b) se trouvant à une position plus à gauche que l'axe du centre de rotation (RC) de l'arbre de direction (2),
dans lequel, alors que la distance entre chacune des positions sur les surfaces inclinées (55a, 55b) et l'axe du centre de rotation (RC) de l'arbre de direction (2) est configurée pour augmenter, la distance entre le plan virtuel (VP) et chacune des positions sur les surfaces inclinées (55a, 55b) est configurée pour augmenter graduellement ;
et dans lequel le commutateur gauche (LS) est pourvu sur la deuxième surface inclinée (55b), et le commutateur droit (RS) est pourvu sur la première surface inclinée (55a) .

2. Véhicule à enfourcher (100) selon la revendication 1, dans lequel
le deuxième commutateur est configuré pour transmettre une instruction à une cible de contrôle à contrôler quand le véhicule est à l'arrêt.

3. Véhicule à enfourcher (100) selon la revendication 1 ou 2, comprenant en outre un siège (5) pourvu sur le corps principal du véhicule (100A), dans lequel
le guidon (50) est pourvu de manière tournante dans une plage angulaire prédéterminée par rapport au châssis de véhicule (1),
dans lequel la première position du commutateur gauche (LS) ou la deuxième position du commutateur droit (RS) sur la surface supérieure du carénage de guidon (55) chevauche le compteur (58) en direction de la ligne de vision du conducteur qui est assis sur le siège (5) avec le guidon (50) tourné au maximum dans la plage angulaire.

4. Véhicule à enfourcher (100) selon l'une quelconque des revendications 1 à 3, dans lequel
le deuxième commutateur est configuré pour transmettre une instruction quand il est actionné.

5. Véhicule à enfourcher (100) selon la revendication 4, dans lequel
le deuxième commutateur est configuré pour transmettre des instructions différentes en fonction de la longueur de la période durant laquelle le deuxième commutateur est actionné.

6. Véhicule à enfourcher (100) selon la revendication 5, dans lequel
les différentes instructions transmises par le deuxième commutateur sont des instructions pour différentes cibles de contrôle.

7. Véhicule à enfourcher (100) selon l'une quelconque des revendications 1 à 6, dans lequel
la distance entre le commutateur gauche (LS) et l'axe du centre de rotation (RC) de l'arbre de direction (2) est inférieure à la distance entre le commutateur gauche (LS) et le premier commutateur, et
dans lequel la distance entre le commutateur droit (RS) et l'axe du centre de rotation (RC) de l'arbre de direction (2) est inférieure à la distance entre le commutateur droit (RS) et le premier commutateur.

8. Véhicule à enfourcher (100) selon l'une quelconque des revendications 1 à 7, comprenant en outre un contrôleur (110) qui est configuré pour mettre en oeuvre une authentification d'utilisateur par un système de communication en utilisant un dispositif portable, dans lequel
le contrôleur (110) est configuré pour permettre à l'authentification d'utilisateur de réussir dans le cas où un dispositif portable authentifié a été détecté, est configuré pour accepter une instruction transmise par le deuxième commutateur dans le cas où l'authentification d'utilisateur est réussie, et n'accepte pas une instruction transmise par le deuxième commutateur dans le cas où l'authentification d'utilisateur n'est pas réussie.

9. Véhicule à enfourcher (100) selon la revendication 8, dans lequel
le premier commutateur est configuré pour transmettre une instruction pour permettre au contrôleur (110) de mettre en oeuvre l'authentification d'utilisateur.

10. Véhicule à enfourcher (100) selon l'une quelconque des revendications 1 à 9,
comprenant en outre un générateur de force de propulsion (10) qui est configuré pour générer une force de propulsion du véhicule, et
dans lequel le deuxième commutateur est configuré pour transmettre une instruction pour arrêter la génération de la force de propulsion par le générateur de force de propulsion (10).
